# EUROPÄISCHE PATENTSCHRIFT

(11) **EP 0 589 343 B1**
(45) Veröffentlichungstag und Bekanntmachung des Hinweises auf die Patenterteilung: **24.06.1998**
(21) Anmeldenummer: 93114826.6
(22) Anmeldetag: 15.09.1993
(51) Int. Cl.: B32B 5/18, B32B 27/30, B32B 27/40, A47K 3/02

(54) **Mehrschichtiger, wannen- oder schalenförmiger Kunststoffkörper u. Verfahren zu seiner Herstellung**
Multilayer trough- or shell-shaped plastic article and method for producing the same
Elément en matière plastique à plusieurs couches en forme de baquet ou de coque et procédé de sa fabrication

(30) Priorität: 19.09.1992 DE 4231396
(43) Veröffentlichungstag der Anmeldung: 30.03.1994
(73) Patentinhaber: Röhm GmbH, 64293 Darmstadt (DE)
(72) Erfinder: Benz, Volker, Dr., D-64739 Höchst (DE); Blumenschein, Michael, D-64625 Bensheim (DE); Knoblauch, Georg, D-81245 München (DE); Roche, Peter, D-82275 Emmering (DE)

(56) Entgegenhaltungen:
- EP-A- 0 285 046
- EP-A- 0 318 797
- US-A- 4 177 099

## Beschreibung

Die Erfindung betrifft einen dreidimensional geformten, wannen- oder schalenförmigen Körper aus mehreren Kunststofflagen mit einer konvexen und einer konkaven Seite, wobei die konkave Seite von aus einer Schicht aus Polymethylmethacrylat und die konvexe Seite aus einer verstärkenden Schicht eines steifen Polyurethankunststoffes besteht, sowie ein Verfahren zu seiner Herstellung. Typische Kunststoffkörper dieser Art sind mit Polyurethanschaumstoff verstärkte Badewannen aus Polymethylmethacrylat.

### Stand der Technik

Aus der GB-A 2 148 786 ist es bekannt, einen aus einer Polymethylmethacrylat-Platte tiefgezogenen Badewannenkörper an seiner konvexen Seite mit einer Schicht aus Polyurethanschaumstoff zu verstärken. Als einzige Maßnahme, um die Haftung der Polyurethanschaumstoffschicht an dem Polymethylmethacrylat zu gewährleisten, wird die Entfettung der zu beschichteten Wannenseite empfohlen.

In der Praxis hat sich die Haftung der Polyurethanschaumstoffschicht als ungenügend erwiesen, wenn sie im Sprühverfahren auf die Rückseite des Polymethylmethacrylat-Wannenkörpers aufgetragen wird. Bei mechanischer und thermischer Belastung solcher Wannen, z.B. beim Füllen mit heißem Wasser oder beim Betreten an wechselnden Stellen des Bodenbereichs, können hohe Spannungen und Scherkräfte an eng begrenzten Stellen zwischen den verbundenen Schichten auftreten. An solchen Stellen kann es zu Ablösungen der Schaumstoffschicht von der Polymethylmethacrylat-Schicht kommen, die sich bei weiterer Belastung ausweiten, bis es zum Bruch infolge unzureichender Versteifung kommt.

Gemäß der EP-A 211 495 wird die Ablösung der Schaumstoffschicht vermieden, wenn als Treibmittel keine Halogenkohlenwasserstoffe, sondern Wasser verwendet wird. Wasser reagiert jedoch mit den Isocyanatgruppen des zur Bildung der Polyurethanschaumstoffschicht verwendeten Isocyanatharzes und übt daher einen deutlichen Einfluß auf die Eigenschaften des Polyurethans aus. Man kann daher nicht die Wassermenge beliebig nach der gewünschten Schäumfähigkeit wählen, ohne gleichzeitig die Polymerisateigenschaften zu verändern.

Offenbar wird auch durch diese Maßnahme die Ablösungsgefahr der Schaumstoffschicht nicht in befriedigender Weise vermindert, denn die gleiche Patentinhaberin hat in der EP-A 304 187 vorgeschlagen, zur weiteren Verbesserung der Haftung die mit der Schaumstoffschicht zu verstärkende Kunststoffschicht mit nukleophilen Gruppen auszurüsten, die gegenüber dem Isocyanatharz reaktiv sind. Die nukleophilen Gruppen werden bei der Herstellung von Polymethylmethacrylat-Platten nach dem Gießverfahren in Form von hydrophilen Comonomeren oder Additiven in die zugrundeliegende Monomermischung eingearbeitet. Dies bedeutet eine tiefgreifende Änderung des Herstellungsverfahrens von Polymethylmethacrylat-Platten, die Änderungen von deren Verhalten, beispielsweise gegenüber Wasser, und Probleme bei der Herstellung infolge eines geänderten Haftungsverhaltens des Polymerisats an den Glaswänden der Polymerisationskammer nach sich ziehen können.

Aus der US-A 4,177,099 ist es bekannt, auf eine gereckte Acrylglasplatte eine haftvermittelnde Schicht aus einem Polyurethan, gelöst in Chloroform, aufzutragen und die beschichtete Seite unter hohem Druck und hoher Temperatur mit einer vorgefertigten klaren Platte oder Folie aus einem Polyurethankunststoff zu verbinden. Als Haftvermittler sind Polyurethane mit hoher Kristallisationsneigung ungeeignet. Chloroform als Lösungsmittel hat den Nachteil, daß es auf die Acrylglasplatte korrodierend wirkt.

Es ist das Ziel der Erfindung, eine dauerhafte Verbindung zwischen der Polymethylmethacrylat-Schicht und der verstärkenden Polyurethan-Kunststoffschicht von schalen- oder wannenförmigen Körpern zu gewährleisten, ohne das Herstellungsverfahren der Polymethylmethacrylat-Platten zu verändern und ohne die Wahl des Treibmittels für die verstärkende Polyurethanschicht einzuschränken. Die Einwirkung korrodierender Mittel auf das Acrylglas soll möglichst vermieden werden.

Es wurde gefunden, daß dieses Ziel bei dem gattungsmäßigen Verfahren, bei dem auf die konvexe Seite der Schicht aus Polymethylmethacrylat eine verstärkende Schicht eines reaktiven Isocyanatharzes aufgetragen wird, das zu einem steifen Polyurethankunststoff aushärtet, dann erreicht wird, wenn die konvexe Seite der Schicht aus Polymethylmethacrylat mit einer Lösung eines im wesentlichen unvernetzten, elastischen Polymerharzes von starker Kristallisationsneigung mit einer Erweichungstemperatur nicht unter 50°C mit Urethan-, Ester- und/oder Hydroxylgruppen in Methoxypropanol und/oder Butylacetat und gegebenenfalls Aceton als Lösungsmittel beschichtet wird und daß nach dem Trocknen der Beschichtung die verstärkende Schicht des reaktiven Isocyanatharzes aufgetragen und ausgehärtet wird.

Die erfindungsgemäßen dreidimensional geformten, wannen- oder schalenförmigen Körper aus mehreren Kunststofflagen mit einer konvexen und einer konkaven Seite zeichnen sich in der Regel dadurch aus, daß zwischen der Polymethylmethacrylat- und der Polyurethan-Kunststoffschicht in Berührung mit diesen eine dünnere Schicht aus einem elastischen Polymerharz mit Urethan-, Ester- und/oder Hydroxylgruppen angeordnet ist, das wenigstens teilweise in einem Lösungsmittelgemisch aus Methoxypropanol, Butylacetat und gegebenenfalls Aceton löslich ist. Die Schicht kann an der Berührungsfläche mit dem Polyurethankunststoff vernetzt und dadurch teilweise unlöslich sein. Wenn bei der Herstellung der Zwischenschicht vernetzende Zusätze mitverwendet werden, was möglich, aber nicht notwendig ist, so kann die Schicht auch gänzlich unlöslich sein.

Der Gedanke, die unzureichende Haftung zweier Kunststoffschichten durch eine dazwischen angeordnete Schicht eines klebenden oder haftungsfördernden Harzes zu verbessern, ist an sich bekannt. Die Schwierigkeit lag im vorliegenden Falle darin, daß gebräuchliche Haftharze in organischen Lösungsmitteln gelöst werden mußten, die eine stark korrosive Wirkung auf das Polymethylmethacrylat ausübten. Harze, die in nicht-korrosiven Lösungsmitteln, wie z.B. aliphatischen Kohlenwasserstoffen, löslich sind, erwiesen sich als ungeeignet, die Haftung zu verbessern.

Überraschenderweise erwiesen sich bestimmte elastische Polymerharze mit Urethan-, Ester- und/oder Hydroxylgruppen als löslich in einem Lösungsmittelgemisch aus Methoxypropanol, Butylacetat und gegebenenfalls Aceton, das wenig korrosiv für Polymethylmethacrylat sind, wenn es in Form einer Polymerlösung aufgetragen und getrocknet werden. Bei einem Mischungsverhältnis von 20 : 60 : 20 Gew.-Tln. der oben genannten Komponenten wurden keine Rißbildung und keine Trübung der beschichteten Polymethylmethacrylat-Oberfläche beobachtet. Linear aufgebaute Polymerharze sind in organischen Lösungsmitteln am besten löslich. Mit zunehmender Verzweigung und/oder Vernetzung der Polymermoleküle nimmt die Löslichkeit ab. Für die Zwecke der Erfindung reicht es aus, wenn eine klare Polymerlösung hergestellt und zu einer gleichförmigen Schicht aufgetragen werden kann, selbst wenn die Lösung einen teilweise kolloidalen Zustand haben sollte.

Es wurde gefunden, daß bestimmte elastische Polymerharze mit Urethan-, Ester- und/oder Hydroxylgruppen eine gute haftvermittelnde Wirkung zwischen der Polymethylmethacrylat- und der Polyurethan-Schicht ausüben und darüberhinaus in dem erwähnten Lösungsmittelgemisch löslich sind. Aus dieser Erkenntnis ergab sich die Möglichkeit, dreidimensional geformte, wannen- oder schalenförmige Körper aus Polymethylmethacrylat mit einer Beschichtung eines elastischen Polymerharz mit Urethan-, Ester- und/oder Hydroxylgruppen zu versehen, und eine verstärkenden Schicht eines steifen Polyurethankunststoffes dauerhaft haftend darauf anzubringen.

Bei der Bestimmung der Schadensspannung im Spannungskorrosionstest, dessen Durchführung im Ausführungsbeispiel im einzelnen beschrieben ist, zeigt sich, ob die Polymethylmethacrylat-Schicht beim Aufbringen der Lösung durch Rißbildung geschwächt wird. Bei einer Schadensspannung des Acrylglases gegenüber der Polymerlösung von wenigstens 12 N/mm², vorzugsweise wenigstens 14 N/mm², kann das resultierende mehrlagige Material als im wesentlichen rißfrei angesehen werden.

### Ausführung der Erfindung

Die Herstellung dreidimensional geformter, wannen- oder schalenförmiger Körper, wie Badewannen oder Duschtassen, aus Polymethylmethacrylat-Platten ist allgemein bekannt. Man verwendet dazu überwiegend sogenanntes "gegossenes" Acrylglas, das durch Polymerisation von Methylmethacrylat in einer aus zwei Glasscheiben gebildeten Flachkammer erzeugt wird und ein so hohes Molekulargewicht hat, daß es beim Erwärmen über die Erweichungstemperatur in den gummiartigen, thermoelastischen Zustand eintritt, aber auch beim weiteren Erwärmen nicht schmilzt. Neuerdings werden auch extrudierte Platten aus thermoplastischen Polymethylmethacrylat-Formmassen für diesen Zweck verwendet. Beide Plattentypen werden bis zum thermoelastischen Zustand erhitzt und mittels Positiv- oder Negativformwerkzeugen dreidimensional verformt und durch Abkühlung unter die Erweichungstemperatur in ihrer Form fixiert.

Der Begriff Polymethylmethacrylat schließt Copolymerisate ein, die neben Methylmethacrylat als Hauptmonomer begrenzte Mengen an mischpolymerisierbaren Comonomeren enthalten. Der Anteil des Methylmethacrylats liegt in der Regel über 80, vorzugsweise über 90 Gew.-%, bezogen auf das Polymerisatgewicht. Im allgemeinen werden Platten von 3 bis 10 mm Dicke eingesetzt, die farbig pigmentiert sind.

Die konkave Seite des dreidimensional geformten Körpers ist die Schau- und Nutzseite. Die konvexe Rückseite wird mit der Lösung des elastischen Polymerharzes mit Urethan-, Ester- und/oder Hydroxylgruppen beschichtet und zu einer festen Überzugsschicht getrocknet. Polymerlösungen mit einem Harzgehalt von 0,5 bis 30, vorzugsweise 1 bis 15, insbesondere 3 bis 8 Gew.-% sind geeignet.

Die elastischen, urethan-, ester- und hydroxylgruppenhaltigen Polymerharze unterscheiden sich hinsichtlich ihrer Kristallisationsneigung, die in der Erweichungstemperatur in Erscheinung tritt. Harze mit hoher Kristallisationsneigung haben Erweichungstemperaturen nicht unter 50 und gegebenenfalls bis zu 80°C oder darüber. Diese Harze werden für die Erfindung verwendet, während nichtkristalline Harze mit Erweichungstemperatur von etwa 45°C oder darunter zur Bildung von Spannungsrissen führen können und deshalb ungeeignet sind.

Bevorzugte Polymerharze sind lineare Hydroxyl-Polyester-Polyurethane, die durch Umsetzung eines Teils der Hydroxylgruppen eines Polyester-Polyols mit einem Diisocyanat unter Bildung von Urethangruppen entstehen. In der Reihe dieser Harze sind diejenigen mit starker Kristallisationsneigung besonders geeignet. Typische Lösungsviskositäten, gemessen an 15 %igen Lösungen in Methylethylketon bei 23°C, liegen bei 1 - 2 Pa s (Brookfield-Viskosimeter LVF, Spindel 3, 60 U/min). Eine geeignete Polymerharzlösung wird von der Röhm GmbH unter der Bezeichnung "Grundierung 60" angeboten.

Andere Polymerharze mit Urethan-, Ester- und/oder Hydroxylgruppen können anhand ihrer Löslichkeit in dem oben erwähnten Lösungsmittelgemisch und ihrer Erweichungstemperatur ausgewählt werden. Die genannten Gruppen wirken sich vorteilhaft auf die Haftungseigenschaften an Polymethylmethacrylat und an Polyurethan-Kunststoffen aus, so daß Harze, die alle drei genannten Gruppen enthalten, besonders bevorzugt sind. Polymerharze mit Urethan- und Estergruppen ohne Hydroxylgruppen oder mit Ester- und Hydroxylgruppen ohne Urethangruppen sind ebenfalls in vielen Fällen verwendbar. Es ist vorteilhaft, wenn auch nicht zwingend, wenn die Estergruppen in der Hauptkette des Polymerharzes angeordnet sind.

Das Lösungsmittelgemisch für die Erzeugung der haftvermittelnden Zwischenschicht des elastischen Polymerharzes enthält vorzugsweise 60 Gew.-Tle. Butylacetat und je 20 Gew.-Tle. Aceton und Methoxypropanol.

Die Polymerharzlösung kann mit jeder üblichen Beschichtungstechnik auf die Polymethylmethacrylat-Schicht aufgetragen werden, vorzugsweise durch Spritzen. Die erforderliche Dicke hängt von der Konzentration ab. Die Beschichtung kann bei Raumtemperatur oder leicht erhöhter Temperatur, gegebenenfalls in einem Luftstrom getrocknet werden.

Auf diese Schicht kann die verstärkende Schicht aus Polyurethan-Kunststoff aufgebracht werden. Geeignete Harzsysteme für diesen Zweck sind bekannt und im Handel erhältlich. Sie enthalten in der Regel wenigstens ein Polyol, vorzugsweise ein Polyester-Polyol, und wenigstens ein mehrfunktionelles Isocyanat, das unter Ausbildung einer vernetzten Polymermatrix mit dem Polyol reagiert, sowie gegebenenfalls Härtungskatalysatoren und andere Additive. Wesentlich ist, daß die Mischung zu einem steifen, bei Raumtemperatur unelastischen Polyurethan-Kunststoff aushärtet.

Sofern als Additive Wasser oder Treibmittel mitverwendet werden, bildet sich eine mehr oder weniger stark geschäumte Polyurethan-Kunststoffschicht. Ihre Dichte liegt vorzugsweise im Bereich von 0,2 bis 1,0 kg/m³. Sie kann weiterhin in einer Menge von z.B. 5 bis 40 Gew.-%, bezogen auf das Gesamtgewicht der verstärkenden Schicht, Füllstoffe, wie Mineralien oder Faserstoffe, insbesondere Glasfasern, enthalten.

Die erforderliche Dicke der verstärkenden Schicht hängt von der Größe und Gestalt des dreidimensional geformten Körpers ab. Für Badewannen ist eine Schichtdicke von 5 bis 20 mm geeignet; für Duschtassen und Körper vergleichbarer Größe und Beanspruchbarkeit reichen oft schon 3 bis 10 mm. Die verstärkende Schicht kann an hoch belasteten Stelle dicker als an wenig belasteten Stellen ausgeführt werden.

Das Harzgemisch aus Polyol und Polyisocyanat und gegebenenfalls Zusätzen wird vorzugsweise mittels einer Zweistoff-Mischdüse auf die beschichtete, konvexe Seite des wannen- oder schalenförmigen Körpers aufgetragen, wobei sehr schnell Härtung eintritt. Sie beginnt schon in der Mischdüse und ist nach dem Aufsprühen bei Temperaturen von 20 bis 30°C innerhalb weniger Sekunden oder Minuten abgeschlossen.

Bei einer bevorzugten Ausführungsform der Erfindung wird die verstärkende Schicht aus Polyurethan-Kunststoff wenigstens auf einem Teil der Fläche des dreidimensional geformten Körpers in mehreren Lagen erzeugt. Unmittelbar nach der ersten kann eine zweite Lage aufgetragen werden, bis nach etwa zwei bis fünf Sprühgängen die gewünschte Schichtdicke erreicht ist. Eine besonders hohe Versteifungswirkung bei niedrigem Materialeinsatz in der verstärkenden Schicht wird erreicht, wenn man als erste Schicht eine wenig oder gar nicht geschäumte Polyurethanschicht aufträgt, dann bis zum Mitte der Verstärkungsschicht zunehmend stärker geschäumte Schichten und danach wieder Schichten höherer Dichte erzeugt. In der Praxis hat sich ein dreischichtiger Aufbau bewährt, bei dem die erste und dritte Schicht etwa gleich sind und Dichten von 0,8 bis 1,0 kg/m³ haben und dazwischen eine geschäumte Schicht mit einer Dichte von 0,1 bis 0,5 kg/m³ einschließen.

### Beispiel 1

Aus einer 5 mm dicken Platte aus gegossenem Acrylglas mit einem Gewicht von 8,8 kg wird im thermoelastischen Temperaturbereich eine Badewanne geformt. Auf die konvexe Rückseite wird eine 6 gew.-prozentige Lösung eines Hydroxyl-Polyurethans (Handelsprodukt "Grundierung 60", Röhm GmbH) in einem Lösungsmittelgemisches aus 60 Gew.-% Butylacetat, 20 Gew.-% Aceton und 20 Gew.-% Methoxypropanol gleichmäßig aufgesprüht und bei Raumtemperatur trocknen gelassen. Anschließend werden - bei leichter Bevorzugung des Bodenbereichs - 1,4 kg eines hochdichten Polyurethan-Harzsystems (Handelsprodukt RSM-System "Elastocoat C6816-80-M" der Firma Elastogran Polyurethane GmbH, Olching) aufgetragen, wobei sich eine mittlere Schichtdicke von etwa 2 mm ergibt. Sofort anschließend werden 2,2 kg eines Polyurethan-Hartschaumsystems (Handelsprodukt RSM-System "Elastocoat C6812" der Firma Elastogran Polyurethane GmbH, Olching) aufgetragen, das eine Dichte von 600 kg/m³ und eine mittlere Schichtdicke von 10 mm ergibt. Als letzte Schicht werden nochmals 1,8 kg des für die erste Schicht verwendeten Polyurethan-Harzsystems aufgebracht.

Die verstärkte Badewanne hat ein Gesamtgewicht von 15,4 kg. Mit der beschriebenen Zusammensetzung der Polymerharzlösung wurde an dem verarbeiteten Acrylglas eine Schadensspannung von 17 N/mm² ermittelt. Die verstärkte Badewanne genügt den Anforderungen der europäischen Norm EN 198 für Badewannen aus Acrylglas. Bei einer herkömmlichen GFK-Verstärkung wird diese Brauchbarkeit erst bei einem Gesamtgewicht von 20 kg erreicht.

Zur Bestimmung der Schadensspannung im Spannungskorrosionstest wird ein streifenförmiger Probekörper mit einer Länge von 230 mm, einer Breite von 20 mm und einer Dicke von 4 mm aus unbeschichtetem Acrylglas an einem Ende waagerecht eingespannt und am freien Ende mit einem angehängten Gewicht so belastet, daß nahe der Einspannstelle eine maximale Zugspannung (Sigma max.) von 30 MPa auftritt. Die Zugspannung fällt auf dem Probekörper bis zum Lastangriffspunkt linear auf null ab, so daß jedem Punkt der Oberseite im Verhältnis zum Abstand von der Einspannstelle eine definierte Zugspannung zugeordnet werden kann. Die Oberfläche des Probekörpers wird mit der Polymerharzlösung beschichtet und trocknen gelassen. Die Rißbildung beginnt am Ort der höchsten Zugspannung an der Einspannstelle und schreitet mit der Prüfdauer in Richtung abnehmender Zugspannung fort. Das Ende der Rißbildungszone nach 24 Stunden bei 50°C bezeichnet die Schadensspannung (Sigma grenz.).

### Beispiel 2

Ein Badewannenkörper mit einen Gewicht von 8,6 kg wird wie im Beispiel 1 beschichtet. Die Verstärkungsschicht wird allein aus dem Polyurethan-Hartschaumsystems (Handelsprodukt RSM-System "Elastocoat C6812" der Firma Elastogran Polyurethane GmbH, Olching) erzeugt, indem 8,0 kg des Harzes unter Ausbildung eines Schaumstoffes mit einer Dichte von 600 kg/m³ bis zu einer Gesamtdicke von 15 bis 20 mm in mehreren Schichten aufgetragen wird. Das Gesamtgewicht der verstärkten Wanne beträgt 16,6 kg.

## Patentansprüche

1. Verfahren zur Herstellung von dreidimensional geformten, wannen- oder schalenförmigen Körpern aus mehreren Kunststofflagen mit einer konkaven Schauseite aus einer Schicht von Polymethylmethacrylat und einer konvexen Stützseite, wobei auf die konvexe Seite der Schicht aus Polymethylmethacrylat eine verstärkende Schicht eines reaktiven Isocyanatharzes aufgetragen wird, das zu einem steifen Polyurethankunststoff aushärtet,
dadurch gekennzeichnet,
daß die konvexe Seite der Schicht aus Polymethylmethacrylat mit einer Lösung eines im wesentlichen unvernetzten, elastischen Polymerharzes mit einer Erweichungstemperatur nicht unter 50°C mit Urethan-, Ester- und/oder Hydroxylgruppen in Methoxypropanol und/oder Butylacetat und gegebenenfalls Aceton als Lösungsmittel beschichtet wird und daß nach dem Trocknen der Beschichtung die verstärkende Schicht des reaktiven Isocyanatharzes aufgetragen und ausgehärtet wird.

2. Verfahren nach Anspruch 1, dadurch gekennzeichnet, daß die Lösung eines Polymerharzes eingesetzt wird, das in Form einer 15 gewichtsprozentigen Lösung in Methylethylketon (23°C, Brookfield-LVF-Viskosimeter, Spindel III, 60 Upm) eine Viskosität unter 2 Pa s hat.

3. Verfahren nach Anspruch 1 oder 2, dadurch gekennzeichnet, daß zur Bildung der verstärkenden Schicht mehrere Lagen des Isocyanatharzes aufgetragen werden.

4. Dreidimensional geformter, wannen oder schalenförmiger Kunststoffkörper erhältlich gemäß einem Verfahren nach einem der Ansprüche 1 bis 3.

5. Kunststoffkörper nach Anspruch 4, gekennzeichnet durch mehrere Lagen des verstärkenden Polyurethankunststoffs.

6. Kunststoffkörper nach Anspruch 5, dadurch gekennzeichnet, daß wenigstens eine der Lagen geschäumt ist.

7. Kunststoffkörper nach Anspruch 6, dadurch gekennzeichnet, daß die zweite Lage des verstärkenden Polyurethankunststoffs eine geringere Dichte als die erste Lage hat und daß die letzte Lage eine höhere Dichte als die Lage mit der geringsten Dichte hat.

8. Kunststoffkörper nach einem der Anspüche 4 bis 7, gekennzeichnet durch eine Schadensspannung im Spannungskorrosionstest von wenigstens 12 N / mm².

## Claims

1. Process for producing three-dimensional tub- or bowl-shaped bodies comprising a plurality of plastics layers having a concave show side consisting of a layer of polymethyl methacrylate and a convex support side, wherein a reinforcing layer of a reactive isocyanate resin which cures to form a rigid polyurethane plastic is applied to the convex side of the layer of polymethyl methacrylate, characterised in that the convex side of the layer of polymethyl methacrylate is coated with a solution of a substantially uncrosslinked flexible polymer resin having a softening temperature of not less than 50°C with urethane, ester and/or hydroxy groups in methoxypropanol and/or butyl acetate and optionally acetone as solvent and, after the coating has dried, the reinforcing layer of the reactive isocyanate resin is applied and cured.

2. Process according to claim 1, characterised in that the solution of a polymer resin is used which has a viscosity of less than 2 Pa s in the form of a 15 % by weight solution in methylethylketone (23°C, Brookfield-LVF viscometer, spindle III, 60 rpm).

3. Process according to claim 1 or 2, characterised in that, in order to form the reinforcing layer, a plurality of layers of the isocyanate resin are applied.

4. Three-dimensional tub- or bowl-shaped plastics body obtainable by a process according to one of claims 1 to 3.

5. Plastics body according to claim 4, characterised by a plurality of layers of the reinforcing polyurethane plastic.

6. Plastics body according to claim 5, characterised in that at least one of the layers is a foam.

7. Plastics body according to claim 6, characterised in that the second layer of the reinforcing polyurethane plastic has a lower density than the first layer and the final layer has a higher density than the layer having the lowest density.

8. Plastics body according to one of claims 4 to 7, characterised by a tensile strength at yield in the tensile corrosion test of at least 12 N/mm².

## Revendications

1. Procédé de fabrication de corps moulés tridimensionnels en forme de baquet ou de coque, en plusieurs couches de matières plastiques avec une face visible concave constituée d'une couche de poly(méthacrylate de méthyle) et d'une face d'appui convexe, où sur la face convexe de la coupe en poly(méthacrylate de méthyle) on dépose une couche renforçante d'une résine réactive isocyanate, qui durcit pour donner une matière plastique de polyuréthane rigide,
caractérisé en ce qu'
on enduit la face convexe de la couche de poly(méthacrylate de méthyle) avec une solution d'une résine polymère élastique essentiellement non réticulée, avec un point de ramollissement qui n'est pas inférieur à 50°C avec des groupes uréthane, ester et hydroxyle dans le méthoxypropanol et/ou l'acétate de butyle et le cas échéant l'acétate comme solvant et qu'après le séchage d'enduction, on dépose une couche renforçante de résine réactive isocyanate et on durcit.

2. Procédé selon la revendication 1,
caractérisé en ce qu'
on utilise la solution d'une résine polymère, qui sous la forme d'une solution à 15 % en poids dans la méthyléthylcétone (23°C, viscosimètre Brookefield LVF, mobile III, 60 t/min.) a une viscosité inférieure à 2 Pa.s.

3. Procédé selon la revendication 1 ou 2,
caractérisé en ce que
pour former la couche renforçante, on dépose plusieurs couches de résine isocyanate.

4. Corps moulés tridimensionnels en matière plastique en forme de baquet ou de coque qu'on peut obtenir selon un procédé suivant l'une des revendications 1 à 3.

5. Corps moulés en matière plastique selon la revendication 4,
caractérisés par
plusieurs couches de la matière plastique renforçante de polyuréthane.

6. Corps moulés en matière plastique selon la revendication 5,
caractérisés en ce qu'
au moins l'une des couches est expansée.

7. Corps moulés en matière plastique selon la revendication 6,
caractérisés en ce que
la deuxième couche de matière plastique polyuréthane renforçante a une densité plus faible que celle de la première couche et que la dernière couche a une densité plus élevée que celle de la couche à la densité la plus faible.

8. Corps moulés en matière plastique selon l'une des revendications 4 à 7,
caractérisés par
une contrainte de défauts d'au moins 12 N/mm² dans le test de corrosion sous contrainte.
